# FASCICULE DE BREVET EUROPEEN

(11) **EP 0 854 593 B1**
(45) Date de publication et mention de la délivrance du brevet: **10.07.2002**
(21) Numéro de dépôt: 97403162.7
(22) Date de dépôt: 26.12.1997
(51) Int. Cl.: H04B 7/26

(54) **Procédé de commande de la fréquence d'un répéteur d'un réseau de communication**
Verfahren zur Frequenzsteuerung von einem Zwischenverstärker in einem Übetragungssystem
Method for controlling the frequency of a repeater in a telecommunication system

(30) Priorité: 15.01.1997 FR 9700343
(43) Date de publication de la demande: 22.07.1998
(73) Titulaire: SAGEM SA, 75116 Paris (FR)
(72) Inventeur: Huriau, Alain, 59910 Bondues (FR); Vandrisse, Christian, 59730 Ovillers, (Solesmes) (FR)
(74) Mandataire: Bloch, Gérard

(56) Documents cités:
- EP-A- 0 169 384
- WO-A-89/10660

## Description

Le territoire couvert par un réseau de communication comporte souvent, lorsqu'il s'agit d'un réseau radio, des obstacles créant des zones d'ombre radio pour les stations du réseau. La couverture d'une zone d'ombre s'effectue au moyen d'un répéteur ayant une antenne d'émission/réception en liaison avec une station du réseau et une antenne associée de réception/émission couvrant la zone d'ombre. Fonctionnellement, un répéteur est donc un simple déflecteur pour les ondes radio.

Si l'on prend l'exemple d'un réseau radiotéléphonique, pour émetteurs-récepteurs portables mobiles, chaque station utilise plusieurs fréquences porteuses afin de disposer d'un nombre suffisant de canaux. Un répéteur comporte donc autant de chaînes de répétition, réglées sur les fréquences de la station. Incidemment, les terminaux portatifs mobiles du réseau sont réalisés pour détecter et même isoler ces fréquences porteuses.

Le plan de fréquences de la station est cependant susceptible de changer, si par exemple une nouvelle station voisine est prévue, avec des fréquences trop proches de celles déjà utilisées. Il faut alors une intervention pour régler le répéteur sur les nouvelles fréquences.

Par ailleurs, l'une des chaînes du répéteur peut tomber en panne. Bien que la pluralité des chaînes offre une redondance, le répéteur risque cependant d'être totalement non opérationnel si la chaîne en panne est celle qui transmet un canal de signalisation gérant l'attribution des canaux, de toutes les chaînes, aux abonnés. Il faut donc intervenir immédiatement pour réparer ou, au moins, commuter l'une des chaînes en fonctionnement sur la fréquence du canal de signalisation.

Un répéteur de l'art antérieur présentant les caractéristiques ci-dessus est par exemple enseigné par WO 89/10660. La présente invention vise à s'affranchir des interventions humaines de réglage en fréquence des répéteurs de réseaux de communication, radio ou autres.

A cet effet, l'invention concerne un procédé de commande d'un répéteur d'une station de base d'un réseau de communication pour émetteurs-récepteurs mobiles, répéteur comportant des moyens de réglage d'au moins une chaîne de répétition sur une fréquence de porteuse de la station, procédé caractérisé par le fait qu'on commande les moyens de réglage par un des émetteurs-récepteurs du réseau, en écoute de la station et donc agencé pour reconnaître la fréquence de porteuse de celle-ci.

Ainsi, le répéteur est piloté par la station à travers un émetteur-récepteur et l'ensemble répéteur-émetteur/récepteur constitue un répéteur actif, télécommandé.

Comme exposé ci-dessus, l'invention s'applique en particulier aux réseaux radio, mais elle n'est cependant pas limitée à ceux-ci puisqu'en fait la nature du médium de transmission n'intervient pas dans l'invention.

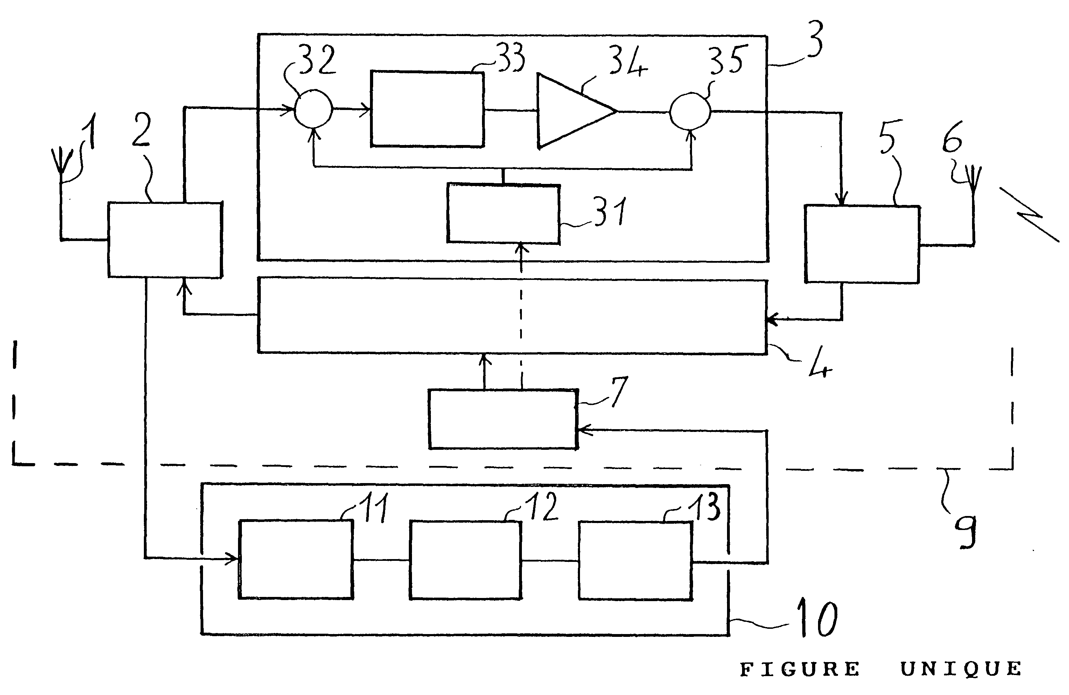

L'invention sera mieux comprise à l'aide de la description suivante d'un mode de mise en oeuvre préféré du procédé de l'invention, en référence à la figure unique annexée qui représente un schéma bloc d'un répéteur et d'un récepteur mettant en oeuvre le procédé de l'invention.

Le répéteur représenté sous la référence 9 comporte une antenne radio 1 de liaison avec une station de base, non représentée, d'un réseau de communication, ici le réseau GSM de radiocommunication, pour émetteurs-récepteurs mobiles. Un duplexeur 2 relie l'antenne 1 à une chaîne 3 de répétition en réception et à une chaîne 4 de répétition en émission vers la station. Les chaînes 3 et 4 ont la même structure et cette dernière chaîne n'a donc pas été représentée en détails. Dans le même souci de clarté, on n'a représenté dans chaque sens qu'une seule des chaînes semblables existant effectivement, réglées sur des porteuses différentes. Symétriquement, un duplexeur 5 et une antenne 6 relient toutes les chaînes comme 3 et 4 à des postes radio téléphoniques mobiles d'une zone d'ombre couverte par le répéteur 9. Un processeur commun 7 commande individuellement un oscillateur local 31 de la chaîne 3 qui lui-même commande un changeur (abaisseur) de fréquence 32, relié au duplexeur 2, et un changeur (élévateur) de fréquence 35 relié au duplexeur 5. Un filtre passe-bande sélectif 33 suivi d'un amplificateur 34 relie la sortie du changeur de fréquence 32 à une entrée du changeur de fréquence 35.

On notera que les changeurs de fréquence 32, 35 pourraient aussi être respectivement élévateur et abaisseur. Ce qu'il faut, c'est restituer au duplexeur 5 la même fréquence que celle fournie par le duplexeur 2.

Un oscillateur homologue de chaque autre chaîne est aussi commandé individuellement par le processeur 7.

Un poste émetteur/récepteur de radiotéléphonie 10 du réseau GSM sert ici de récepteur des émissions de la station de base. Le poste 10 est un poste du commerce, qui, en écoute de la station de base, reconnaît ses fréquences porteuses possibles d'émission et en particulier reçoit et interprète un canal de signalisation, appelé BCCH, gérant les diverses communications. Lors de l'établissement d'une nouvelle communication avec un abonné du réseau, la station spécifie par ce canal, au poste de l'abonné, la fréquence de porteuse ou canal à utiliser et la voie temporelle réservée dans une trame, ou multiplex temporel, transmise par la porteuse spécifiée.

Le récepteur 10 comporte un circuit de réception 11, relié ici à la station à travers l'antenne 1 et le duplexeur 2, circuit assurant la sélection des fréquences porteuses et le démultiplexage des voies temporelles.

Le circuit de réception 11 fournit les signaux numériques ainsi reçus à un microprocesseur 12 qui les exploite. Le microprocesseur 12 reçoit en particulier le canal de service BCCH dans une voie temporelle réservée dans l'une des trames de porteuse et peut ainsi commander et régler les oscillateurs locaux comme 31 pour asservir la fréquence de chaque chaîne de répétition (3, 4). Plus précisément, toutes les porteuses sont reçues par chaque chaîne comme 3, mais seule n'est réamplifiée, dans une chaîne (3) considérée, que la porteuse dont la fréquence est une combinaison de la fréquence de l'oscillateur local comme 31 et de la fréquence centrale du filtre passe-bande comme 33. La commande provenant du microprocesseur 12 traverse un circuit d'interface 13, comportant un connecteur de raccordement d'un cordon de liaison aboutissant au processeur 7.

Dans le cas de l'existence, comme ici, d'une pluralité de chaînes 3, 4 dans chaque sens, on peut ainsi réaffecter à la fréquence d'une chaîne du répéteur 9 une autre chaîne, pour par exemple assurer l'acheminement du canal de signalisation BCCH jusqu'à la zone couverte par le répéteur 9.

On conçoit que le récepteur 10 aurait pu être un récepteur, fixe ou mobile, situé à distance du répéteur 9 et relié à celui-ci par une liaison de données.

Comme indiqué précédemment, l'invention peut s'appliquer à tout réseau de communication, tel que filaire électrique ou optique.

## Revendications

1. Procédé de commande du réglage en fréquence d'un répéteur (9) pour signaux provenant d'une station de base d'un réseau de communication pour émetteurs-récepteurs mobiles, répéteur (9) comportant des moyens (31) de réglage en fréquence d'au moins une chaîne de répétition (3 ;4) sur une fréquence de porteuse de la station, procédé **caractérisé par le fait que** la commande du réglage en fréquence s'effectue en commandant les moyens de réglage (31) par un des émetteurs-récepteurs (10) du réseau, raccordé au répéteur (9), en écoute de la station et donc agencé pour reconnaître la fréquence de porteuse de celle-ci.

2. Procédé selon la revendication 1, dans lequel, le répéteur (9) comportant une pluralité de chaînes (3 ; 4), quand une des chaînes tombe en panne, on commute ladite chaîne sur la fréquence d'une autre.

3. Procédé selon l'une des revendications 1 et 2, dans lequel on assure la liaison entre l'émetteur-récepteur de réglage (10) et la station par une des antennes (1) du répéteur (9).

4. Procédé selon l'une des revendications 1 à 3, dans lequel on règle une chaîné de répétition (3; 4) sur une fréquence porteuse de la station en agissant sur un oscillateur local (31).

## Claims

1. Method for controlling the frequency adjustment of a repeater (9) for signals coming from a base station of a communication network for mobile transceivers, the repeater (9) having means (31) for frequency adjustment of at least one repetition channel (3; 4) to a carrier frequency of the station, the method being **characterised in that** the frequency adjustment control is carried out by controlling the adjustment means (31) by one of the transceivers (10) of the network, connected to the repeater (9), listening to the station and thus arranged to recognise the carrier frequency thereof.

2. Method according to claim 1, wherein the repeater (9) having a plurality of channels (3; 4), when one of the channels fails the said channel is switched to the frequency of another.

3. Method according to one of claims 1 and 2, wherein the connection between the adjusting transceiver (10) and the station is provided by one of the antennae (1) of the repeater (9).

4. Method according to one of claims 1 to 3, wherein a repetition channel (3; 4) is adjusted to a carrier frequency of the station by acting upon a local oscillator (31).

## Patentansprüche

1. Steuerverfahren zur Frequenzeinstellung eines Zwischenverstärkers (9) für
Signale, die aus einer Basisstation eines Kommunikationsnetzes für mobile Sender-Empfänger stammen, wobei der Zwischenverstärker (9) Frequenzeinstellungseinrichtungen (31) für mindestens eine Zwischenverstärkungskette (3; 4) auf eine Trägerfrequenz der Station umfasst, und das Verfahren **dadurch gekennzeichnet ist, dass** die Frequenzeinstellungssteuerung bewerkstelligt wird, indem die Einstellungseinrichtungen (31) durch einen der an den Zwischenverstärker (9) angeschlossenen Sender-Empfänger (10) des Netzes gesteuert werden, die auf Stationsempfang und damit eingerichtet sind, die Trägerfrequenz dieser Station zu erkennen.

2. Verfahren nach Anspruch 1, bei dem der Zwischenverstärker (9) mehrere
Ketten (3; 4) umfasst, und wenn eine der Ketten ausfällt, diese Kette auf die Frequenz einer anderen umgeschaltet wird.

3. Verfahren nach einem der Ansprüche 1 und 2, bei dem die Verbindung
zwischen dem Einstellungs-Sender-Empfänger (10) und der Station durch eine der Antennen (1) des Zwischenverstärkers (9) sichergestellt wird.

4. Verfahren nach einem der Ansprüche 1 bis 3, bei dem eine
Zwischenverstärkungskette (3; 4) auf eine Trägerfrequenz der Station eingestellt wird, indem auf einen lokalen Oszillator (31) eingewirkt wird.
